# EUROPEAN PATENT APPLICATION

(11) **EP 2 947 511 A1**
(43) Date of publication of application: **25.11.2015**
(21) Application number: 15164295.6
(22) Date of filing: 20.04.2015
(51) Int. Cl.: G03B 21/10, G03B 21/28, G03B 21/14, H04N 9/31

(54) **PROJECTION DEVICE**

(30) Priority: 08.05.2014 JP 2014097034
(71) Applicant: FUJITSU LIMITED, Kawasaki-shi, Kanagawa 211-8588 (JP)
(72) Inventor: Fujikawa, Hideyuki, Kawasaki-shi, Kanagawa 211-8588 (JP); Takano, Minoru, Kawasaki-shi, Kanagawa 211-8588 (JP); Miki, Wataru, Kato-shi, Hyogo 673-1447 (JP); Ohtsuki, Yusuke, Kato-shi, Hyogo 673-1447 (JP)
(74) Representative: Ward, James Norman

(57) **Abstract**

A projection device including: an arm extending from a projection screen ; a projector unit that outputs a projection light ; a head section that is fixed to the arm further to a leading end side of the arm than the projector unit, and that includes a mirror that reflects the projection light toward the projection screen ; a support section that is fixed to the arm and that supports the projector unit ; and an adjustment section that adjusts an attachment angle of the projector unit with respect to the support section.

## Description

### FIELD

The embodiments discussed herein are related to a projection device.

### BACKGROUND

There are projection devices equipped with projector units that output projection light. Such projection devices illuminate projection light output from the projector unit onto a projection screen, and form a projection image on the projection screen.

### Related Patent Documents

Japanese Laid-Open Patent Publication No. 2010-243576
Japanese Laid-Open Patent Publication No. 2012-32465

There is demand for capability to correct the position of a projection image in such projection devices when the position of the projection image is displaced with respect to the projection screen.

### SUMMARY

Accordingly, it is an object in one aspect of the embodiment to provide a projection device capable of correcting the position of a projection image formed on a projection screen. According to an aspect of the embodiments, a projection device includes: an arm extending from a projection screen; a projector unit that outputs a projection light; a head section that is fixed to the arm further to a leading end side of the arm than the projector unit, and that includes a mirror that reflects the projection light toward the projection screen; a support section that is fixed to the arm and that supports the projector unit; and an adjustment section that adjusts an attachment angle of the projector unit with respect to the support section.

### BRIEF DESCRIPTION OF DRAWINGS

Fig. 1 is a perspective view of a projection device.
Fig. 2 is an enlarged perspective view of relevant portions of a projection device.
Fig. 3 is an enlarged perspective view of relevant portions of a projection device.
Fig. 4 is a perspective view illustrating an internal configuration of a projector section.
Fig. 5 is a perspective view illustrating an internal configuration of a projector section.
Fig. 6 is an enlarged vertical cross-section of relevant portions of a projection device.
Fig. 7 is an exploded perspective view schematically illustrating a support section, a swing member, and a movable member.
Fig. 8 is an explanatory diagram of a way in which the angle of a movable member is adjusted by first adjustment portions.
Fig. 9 is an explanatory diagram of a way in which the angle of a swing member is adjusted by a second adjustment portion.
Fig. 10 is an explanatory diagram of a relationship between a position adjustment direction of the projection image, and a first adjustment portion and a second adjustment portion.
Fig. 11 is an explanatory diagram of a manner in which a position of a projection image is adjusted by a first adjustment portion.
Fig. 12 is an explanatory diagram of a manner in which a position of a projection image is adjusted by a second adjustment portion.

### DESCRIPTION OF EMBODIMENTS

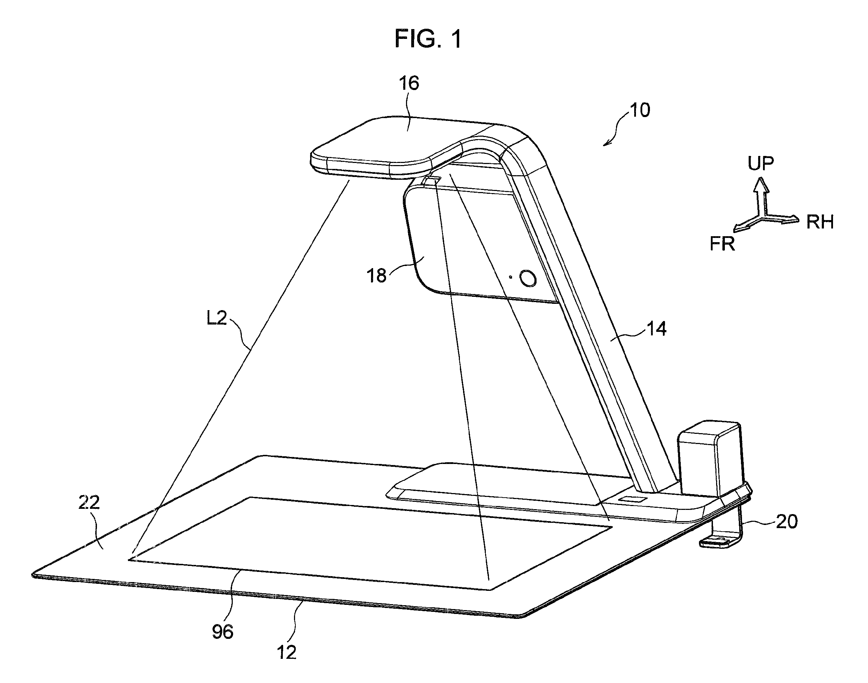

Explanation follows regarding an exemplary embodiment of technology disclosed herein. As illustrated in Fig. 1, a projection device 10 includes a base 12, an arm 14, a head section 16, and a projector section 18. The arrows FR, arrows RH, and arrows UP in each of the drawings respectively indicate the front side, right side, and upper side of the projection device 10.

The base 12 is formed in a flat plate shape. A fixing 20 is provided at a corner on the back right side of the base 12. The base 12 is fixed to an installation target, such as a desk, by the fixing 20.

The front face of the base 12 configures a projection screen 22, and the arm 14 extends from the back right side corner to above the projection screen 22. The arm 14 is sloped with respect to a direction normal to the projection screen 22, so as to slope toward the front and left side of the projection device 10 on progression upward. The head section 16 is fixed to a portion at the top end of the arm 14, and the projector section 18 is fixed to the arm 14 below the head section 16.

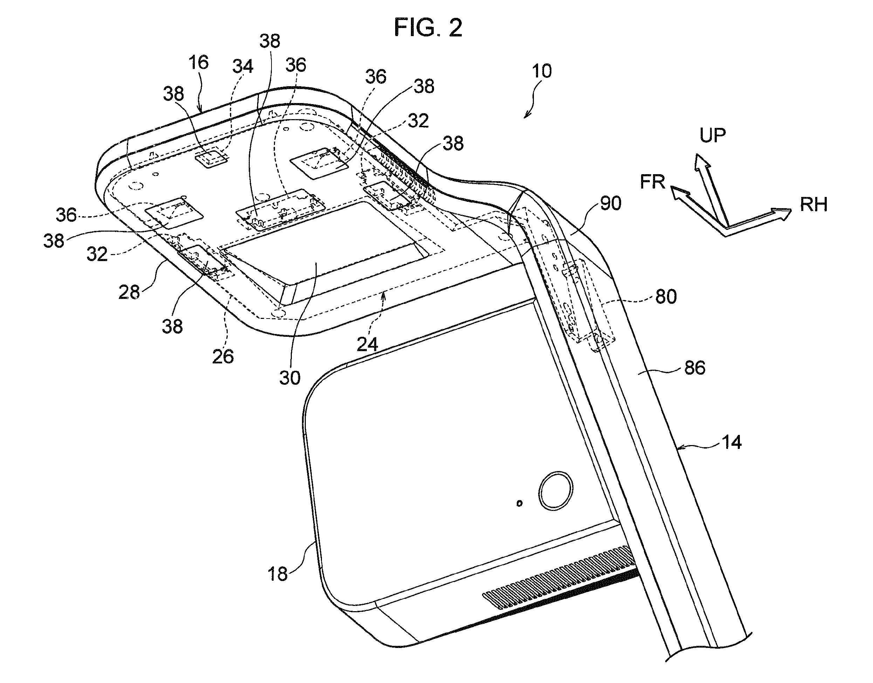

As illustrated in Fig. 2, the head section 16 includes a plate shaped head body 26 formed to a die-cast structural member 24, and a cover 28 that is made from resin and covers the head body 26. A square, flat plate shaped mirror 30 is provided to the lower face of the head section 16.

Pair of stereo cameras 32 and a capture camera 34, serving as examples of a "camera", and plural light emitting diodes (LEDs) 36, serving as an example of a "light", are fixed to the lower face of the head body 26. The pair of stereo cameras 32, the capture camera 34, and the plural LEDs 36 are housed in the cover 28. Windows 38 that transmit light are respectively provided in a lower wall of the cover 28 at positions corresponding to the pair of stereo cameras 32, the capture camera 34, and the plural LEDs 36.

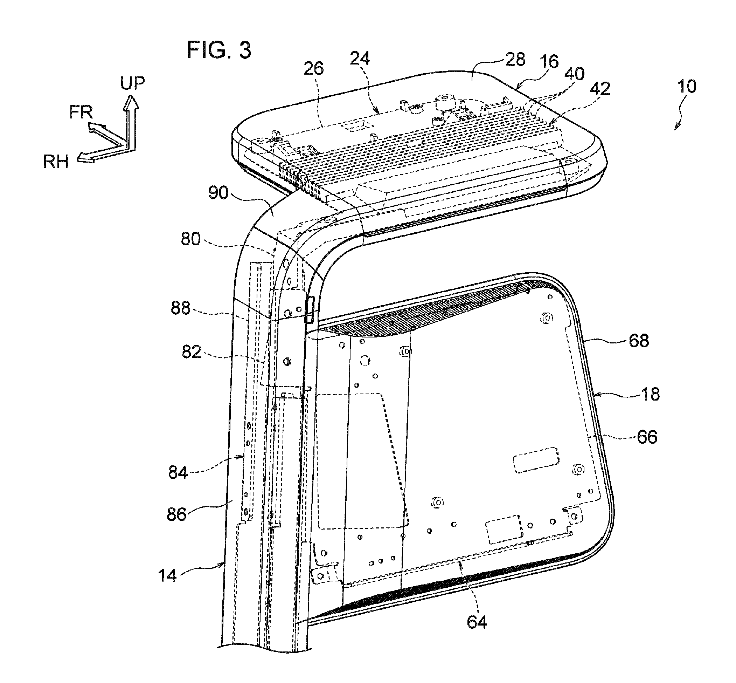

As illustrated in Fig. 3, plural fins 40 extending along the upper side of the head section 16 are formed on the upper face of the head body 26. The plural fins 40 configure a heat sink 42.

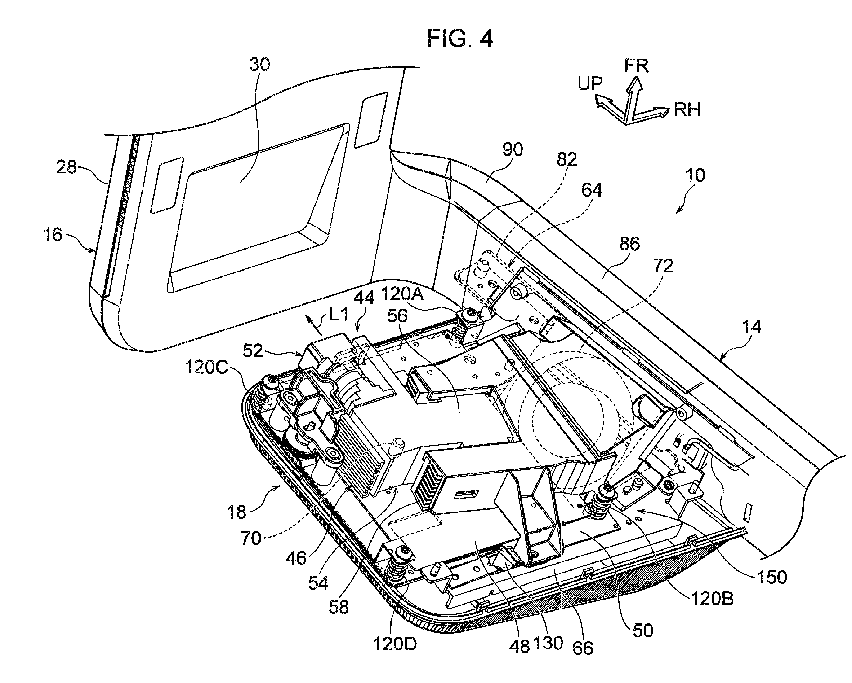

As illustrated in Fig. 4, the projector section 18 includes a projector unit 44, and a swing member 50. The projector unit 44 includes a projector 46, and a movable member 48. The projector 46 is fixed to the rectangular plate shaped movable member 48. The projector 46 includes a lens unit 52 and an output unit 54. The output unit 54 includes a red, green, blue (RGB) light source 56, and a heat sink 58 that is in thermal contact with the RGB light source 56.

The movable member 48 is supported by the swing member 50 that is plate shaped and formed at substantially the same size as the movable member 48. As illustrated in Fig. 3, the projector section 18 includes a plate shaped support section 66 that is formed to a metal plate support member 64, and a resin housing 68. As illustrated in Fig. 4, the swing member 50 is supported by a shaft 70 extending in a direction normal to the support section 66 so as to be rotatable with respect to the support section 66.

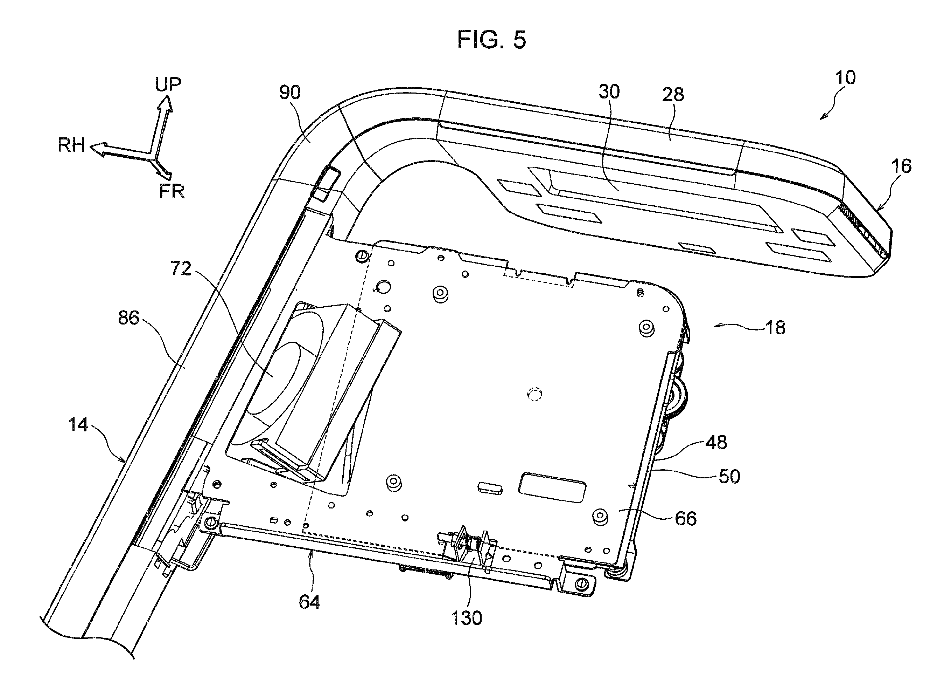

As illustrated in Fig. 5, the projector section 18 includes a fan 72, in addition to each of the members described above. The fan 72 is an example of an axial flow fan, and is fixed to the support section 66. The fan 72, the support section 66, the projector 46, the movable member 48, and the swing member 50 (see Fig. 4) are housed in the resin housing 68 illustrated in Fig. 3.

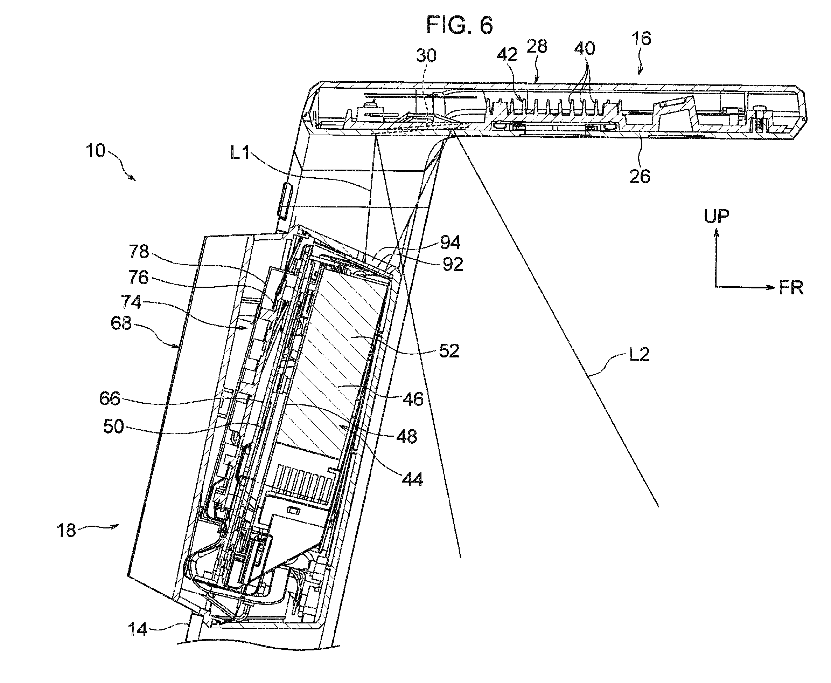

As illustrated in Fig. 6, the projector section 18 includes a control unit 74. The control unit 74 includes a control board 76, and a shield plate 78. The control board 76 is fixed to the support section 66 on the opposite side to the swing member 50 side. The control board 76 controls operation of the projector 46, the stereo cameras 32, the capture camera 34, the plural LEDs 36 (see Fig. 2), and so on. The shield plate 78 covers the control board 76 from the opposite side to the support section 66 side. The control unit 74 is housed in the resin housing 68.

As illustrated in Fig. 2, a first coupling portion 80 is formed extending to the arm 14 side in the structural member 24 formed with the head body 26 of the head section 16. As illustrated in Fig. 3, a second coupling section 82 extending toward the arm 14 side is formed to the support member 64 that is formed by the support section 66 of the projector section 18. The arm 14 includes a frame 84 extending in a straight line and a hollow member 86 housing the frame 84. A coupled portion 88 is formed to the frame 84, and the first coupling portion 80 and the second coupling section 82 are coupled to the coupled portion 88. The head body 26 and the support section 66 (the head section 16 and the projector section 18) are fixed to the frame 84 in a positioned state by coupling the first coupling portion 80 and the second coupling section 82 to the coupled portion 88.

In a state in which the frame 84 is fixed to the head section 16 and the projector section 18, the head section 16 is positioned further to the leading end side of the arm 14 than the projector section 18 that includes the projector unit 44. The first coupling portion 80 and the second coupling section 82 are provided at one side in the lateral direction of the head section 16 and the projector section 18. The head section 16 and the projector section 18 are supported in a cantilevered state by the arm 14.

An extension section 90 that houses the first coupling portion 80 is integrally provided to the cover 28 of the head section 16 so as to extend along the first coupling portion 80. A portion at the bottom end of the extension section 90 and a portion at the top end of the hollow member 86 are connected together.

Explanation next follows regarding details of the optical structure, and the optical operation, of the projection device 10.

In the projector 46 illustrated in Fig. 4, when a projection light L1 is output from the output unit 54, the projection light L1 passes through the lens unit 52, and is output from the lens unit 52 upward, toward the mirror 30. As illustrated in Fig. 6, an emitting section 92 is provided to the projector 46 so as to face the lens unit 52. The emitting section 92 is, for example, a lens cover. A hole 94 is formed, at a position corresponding to the emitting section 92, in the housing 68 that houses the projector 46. The projection light L1 output from the lens unit 52 passes through the emitting section 92, is emitted from the emitting section 92 through the hole 94, and is incident to the mirror 30.

The projection light L1 incident to the mirror 30 is reflected by the mirror 30 toward the projection screen 22, and reflected light L2 of the projected light that has been reflected by the mirror 30 passes through the front of the projector section 18. The mirror 30 is installed at an angle so as to generate the reflected light L2 angled forwards and downwards from the projector section 18 when the projection light L1 is output from the projector 46 (the light L2 reflected toward the projection screen 22 of Fig. 1).

The reflected light L2 from the mirror 30 is illuminated through the front of the projector section 18, and is illuminated on the projection screen 22 on the base 12 illustrated in Fig. 1. As illustrated in Fig. 1, a projection image 96 is formed on the projection screen 22 when the reflected light L2 is illuminated onto the projection screen 22. The pair of stereo cameras 32 and the capture camera 34 illustrated in Fig. 2 operate when the projection image 96 is formed on the projection screen 22. The pair of stereo cameras 32 capture images of the projection screen 22 from side directions, and the capture camera 34 captures an image of the projection screen 22.

The projection image 96 formed on the projection screen 22 illustrated in Fig. 1 is captured by the capture camera 34 (see Fig. 2). When the hand of an operator enters between the head section 16 and the projection screen 22 to work with the projection image 96, the movements of the hand are imaged by the pair of stereo cameras 32 (see Fig. 2). Data of the projection image 96 obtained by the capture camera 34 and the stereo cameras 32 is output to the control board 76 illustrated in Fig. 6, and processed by the control board 76.

The control board 76 operates the plural LEDs 36 (see Fig. 2) as appropriate. On operation, he plural LEDs 36 illuminate light toward the projection screen 22.

Detailed explanation next follows regarding a structure for correcting the position of the projection image 96 formed on the projection screen 22.

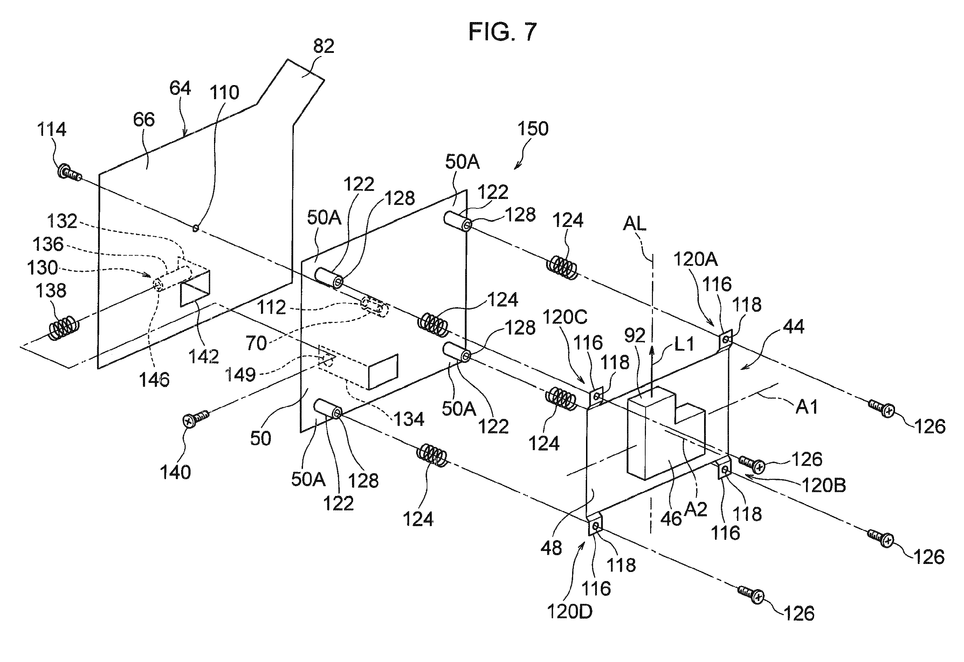

As schematically illustrated in Fig. 7, the projector unit 44 includes the projector 46 that outputs the projection light L1, and the movable member 48 to which the projector 46 is fixed. In Fig. 7, the optical axis of the projection light L1 is depicted as AL, an example of a first orthogonal axis orthogonal to the optical axis AL is depicted by A1, and an example of a second orthogonal axis A2 orthogonal to the optical axis AL and the first orthogonal axis A1 is depicted by A2.

The movable member 48 is formed in rectangular plate shape, and is disposed such that the height direction and the width direction thereof are aligned with the axial direction of the optical axis AL and the axial direction of the first orthogonal axis A1, respectively. The swing member 50 is disposed between the support section 66 formed to the support member 64, and the movable member 48. The swing member 50 is disposed facing toward the movable member 48 and the support section 66 along the second orthogonal axis A2.

The shaft 70 is provided at a central portion of the rectangular plate shaped swing member 50, protruding out to the support section 66 side. A hole 110 is formed in the support section 66 at a position corresponding to the shaft 70, so as to pierce through along the direction in which the support section 66 and the swing member 50 face each other.

A screw hole 112 is formed in a leading end portion of the shaft 70. A fixing screw 114 is screwed into the screw hole 112 from the opposite side of the support section 66 to the swing member 50 side. The shaft 70 is prevented from coming out from the hole 110 by the fixing screw 114 being screwed into the screw hole 112 of the shaft 70. The swing member 50 is thereby supported so as to be rotatable about the second orthogonal axis A2, this being the center of rotation of the shaft 70 with respect to the support section 66.

Plural first adjustment portions 120A, 120B, 120C, 120D are respectively provided at plural locations on the projector unit 44 (for example, at corner portions at 4 locations of the movable member 48 and the swing member 50).

Each of the plural first adjustment portions 120A to 120D includes a fixing portion 116 formed to a corner portion of the movable member 48, a corner portion 50A of the swing member 50, a protrusion 122, a coil spring 124 serving as an example of a "resilient member", and an adjustment screw 126. The corner portions 50A of the rotation members 50 serve as examples of the "fixed portions".

A through hole 118 is formed in each of the fixing portions 116 along the axial direction of the second orthogonal axis A2. Each of the protrusions 122 protrudes out from the corner portion 50A of the swing member 50 toward the fixing portions 116. A screw hole 128 is formed at the leading end side of the protrusion 122. The coil spring 124 is mounted to the protrusion 122 by the protrusion 122 being inserted inside the coil spring 124.

The movable member 48 and the swing member 50 are disposed facing each other in the installed state of the coil spring 124 to the projection 122. The adjustment screw 126 is inserted into the through hole 118 from the opposite side of the movable member 48 to the swing member 50 side, and a leading end portion of the adjustment screw 126 is screwed into the screw hole 128, thereby attaching the movable member 48 to the swing member 50. Namely, the movable member 48 is supported by the swing member 50 through the first adjustment portions 120A to 120D. In a state in which the movable member 48 is supported by the swing member 50, each of the coil springs 124 is interposed in a compressed state between the fixing portion 116 and the corner portion 50A of the swing member 50.

In the first adjustment portions 120A to 120D, the distance between the fixing portion 116 and each of the corner portions 50A of the swing member 50 along the axial direction of the second orthogonal axis A2 is adjusted by rotating the adjustment screw 126.

Namely, when the adjustment screw 126 of each of the first adjustment portions 120A to 120D is rotated in the tightening direction, the distance between the fixing portion 116 and the corner portion 50A narrows at the location where the adjustment screw 126 rotated in the tightening direction is positioned. However, when the adjustment screw 126 is rotated in the loosening direction, the distance between the fixing portion 116 and the corner portion 50A widens at the location where the adjustment screw 126 rotated in the loosening direction is positioned.

The first adjustment portions 120A, 120B are disposed on one side in the axial direction of the first orthogonal axis A1 with respect to the emitting section 92 of the projector 46, and the first adjustment portions 120C, 120D are disposed on the other side in the axial direction of the first orthogonal axis A1 with respect to the emitting section 92 of the projector 46. The first adjustment portions 120A, 120C are disposed on one side in the axial direction of the optical axis AL with respect to the emitting section 92, and the first adjustment portions 120B, 120D are disposed on the other side in the axial direction of the optical axis AL with respect to the emitting section 92.

Thus, for example, when the adjustment screws 126 of the first adjustment portions 120A, 120B are rotated in the tightening direction, the projector unit 44 (the movable member 48 for mounting the projector 46) swings to the one side about the optical axis AL. However, when the adjustment screws 126 of the first adjustment portions 120C, 120D are rotated in the tightening direction, the projector unit 44 swings to the other side about the optical axis AL. Moreover, for example, when the adjustment screws 126 of the first adjustment portions 120A, 120C are rotated in the tightening direction, the projector unit 44 swings to the one side about the first orthogonal axis A1. However when the adjustment screws 126 of the first adjustment portions 120C, 120D are rotated in the tightening direction, the projector unit 44 swings to the other side about the first orthogonal axis A1.

Moreover, for example, when the adjustment screw 126 of the first adjustment portion 120A is rotated in the tightening direction, the projector unit 44 swings to the one side about the optical axis AL, and to the one side about the first orthogonal axis A1. When the adjustment screw 126 of the first adjustment portion 120B is rotated in the tightening direction, the projector unit 44 swings to the one side about the optical axis AL, and toward the other side about the first orthogonal axis A1.

Similarly, for example, when the adjustment screw 126 of the first adjustment portion 120C is rotated in the tightening direction, the projector unit 44 swings to the other side about the optical axis AL, and swings to the one side about the first orthogonal axis A1. Moreover, when the adjustment screw 126 of the first adjustment portion 120D is rotated in the tightening direction, the projector unit 44 swings to the other side about the optical axis AL, and swings to the other side about the first orthogonal axis A1.

When the adjustment screws 126 of the first adjustment portions 120A to 120D are rotated in the loosening direction, the projector unit 44 swings in the opposite direction to the swing when the adjustment screws 126 are rotated in the tightening direction as described above, due to the resilient force of the coil spring 124.

In this manner the first adjustment portions 120A to 120D are provided at the corner portions of the movable member 48 and the swing member 50, and the distance between the fixing portions 116 and the corner portions 50A of the swing member 50 along the axial direction of the second orthogonal axis A2 are adjusted by the first adjustment portions 120A to 120D. The rotation angle of the projector unit 44 with respect to the swing member 50 about the optical axis AL and the first orthogonal axis A1, respectively, is adjusted by adjusting the distance between the fixing portions 116 and the corner portions 50A of the swing member 50 in this manner.

In the support section 66 and the swing member 50 there is also a second adjustment portion 130 provided, separate to the plural first adjustment portions 120A to 120D. The second adjustment portion 130 includes a facing portion 132, a faced portion 134, a protrusion 136, a coil spring 138 serving as an example of a "resilient member", and an adjustment screw 140. The facing portion 132 is formed in a wall shape that protrudes out from the support section 66 toward the opposite side to the swing member 50 side. The facing portion 132 serves as an example of a cut-out protrusion tab, and a hole 142 is formed in the support section 66 adjacent to the facing portion 132. The faced portion 134 is provided at a position corresponding to the hole 142 of the swing member 50. In the assembled state of the swing member 50 to the support section 66, the faced portion 134 is inserted through the hole 142, and faces the facing portion 132 in a rotation direction of the swing member 50 (a tangential direction).

The protrusion 136 protrudes out from the facing portion 132 toward the faced portion 134. A hole 144 is formed in the faced portion 134 at a position corresponding to the protrusion 136, piercing through the faced portion 134 in the thickness direction of the faced portion 134. The coil spring 138 is mounted to the protrusion 136 by the protrusion 136 being inserted inside the coil spring 138.

The adjustment screw 140 is inserted into the hole 144 from the opposite side of the faced portion 134 to the facing portion 132 side. A leading end portion of the adjustment screw 140 is screwed into a hole 146 formed in the leading end side of the protrusion 136. In a state in which the facing portion 132 and the faced portion 134 are fixed with the adjustment screw 140, the coil spring 138 is interposed in a compressed state between the facing portion 132 and the faced portion 134.

The second adjustment portion 130 is positioned further to the radial direction outer side than the shaft 70, this being the center of rotation of the swing member 50, and adjusts the rotation angle of the swing member 50 about the second orthogonal axis A2 with respect to the support section 66,

Namely, when the adjustment screw 140 is rotated in the tightening direction, the distance between the facing portion 132 and the faced portion 134 narrows, and the swing member 50 for installing the projector unit 44 swings about the second orthogonal axis A2 toward the one side. However, when the adjustment screw 140 is rotated in the loosening direction, the distance between the facing portion 132 and the faced portion 134 widens, and the swing member 50 for mounting the projector unit 44 swings about the second orthogonal axis A2 toward the other side due to the resilient force of the coil spring 138.

The second adjustment portion 130 is provided to the support section 66 and the swing member 50, and the rotation angle of the swing member 50 with respect to the support section 66 about the second orthogonal axis A2 is adjusted using the second adjustment portion 130 in this manner. The swing member 50, the first adjustment portions 120A to 120D, and the second adjustment portion 130 configure an adjustment section 150 that adjusts the attachment angle of the projector unit 44 with respect to the support section 66.

Explanation next follows regarding a specific method for correcting the position of the projection image 96.

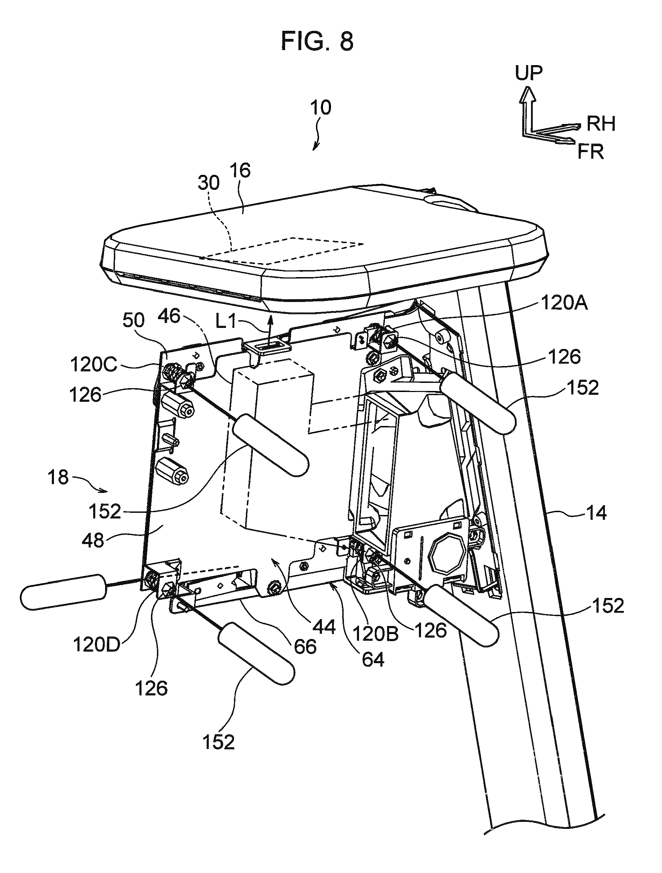

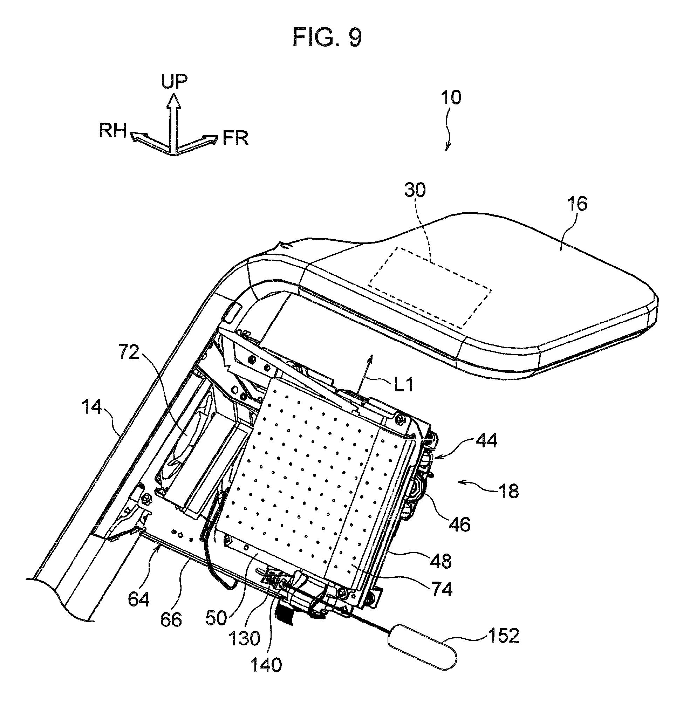

As illustrated in Fig. 8, a head portion of the adjustment screw 126 provided with the plural first adjustment portions 120A to 120D is positioned to the front side of the projection device 10. This thereby enables the adjustment screws 126 of the first adjustment portions 120A to 120D to be rotated by a screw driver 152 from the front side of the projection device 10. However, as illustrated in Fig. 8, Fig. 9, the head portion of the adjustment screw 140 provided to the second adjustment portion 130 is positioned on the opposite side of the projector section 18 to the arm 14 side (for example on the left side of the projection device 10). This thereby enables the adjustment screw 140 of the second adjustment portion 130 to be rotated with the screw driver 152 from the opposite side of the projector section 18 to the arm 14 side.

When the adjustment screws 126 of the first adjustment portions 120A to 120D, and the adjustment screw 140 of the second adjustment portion 130, are rotated with the screw driver 152, the attachment angle of the projector unit 44 with respect to the support section 66 is adjusted as described above. When the attachment angle of the projector unit 44 is adjusted with respect to the support section 66, the direction of the optical axis of the projection light L1 emitted from the projector unit 44 changes, and therefore the incident angle of the projection light L1 to the mirror 30 changes. When the incident angle of the projection light L1 to the mirror 30 changes, the position of the projection image 96 formed on the projection screen 22 moves, as illustrated in Fig. 1.

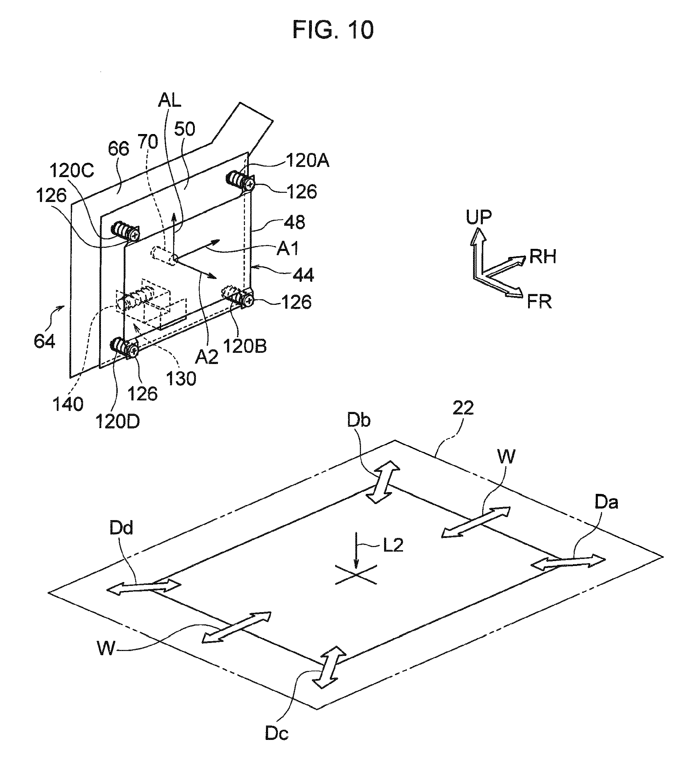

Fig. 10 schematically illustrates the relationship between the plural first adjustment portions 120A to 120D and the second adjustment portion 130, and the position adjustment direction of the projection image 96.

For example, when the adjustment screw 126 of the first adjustment portion 120A is rotated, the projector unit 44 swings about the optical axis AL and the first orthogonal axis A1, and the position Da at the right bottom corner portion of the projection image 96 is adjusted diagonally downward and toward the right of the projection image 96. In a similar manner, when the adjustment screw 126 of the first adjustment portion 120B is rotated, the projector unit 44 is rotated about the optical axis AL and the first orthogonal axis A1, and a position Db at the top right corner portion of the projection image 96 is adjusted diagonally upward and toward the right of the projection image 96.

Moreover, when the adjustment screw 126 of the first adjustment portion 120C is rotated, the projector unit 44 swings about the optical axis AL and the first orthogonal axis A1, and the position Dc at the left bottom corner portion of the projection image 96 is adjusted diagonally downward and toward the left of the projection image 96. When the adjustment screw 126 of the first adjustment portion 120D is rotated, the projector unit 44 swings about the optical axis AL and the first orthogonal axis A1, and a position Dd at the top left corner portion of the projection image 96 is adjusted diagonally upward and toward the left of the projection image 96.

Accordingly, in order to align the position Da of the bottom right corner portion of the projection image 96, the adjustment screw 126 of the first adjustment portion 120A may be rotated, and in order to align the position Db of the top right corner portion of the projection image 96, the adjustment screw 126 of the first adjustment portion 120B may be rotated. Similarly, in order to align the position Dc of the bottom left corner portion of the projection image 96, the adjustment screw 126 of the first adjustment portion 120C may be rotated, and in order to align the position Dd of the top left corner portion of the projection image 96, the adjustment screw 126 of the first adjustment portion 120D may be rotated.

When the adjustment screw 140 is rotated in the second adjustment portion 130, the projector unit 44 swings about the second orthogonal axis A2, and the width direction position W of the projection image 96 is adjusted. Thus, for example, in order to align the width direction position W (the left-right position) of the projection image 96, the adjustment screw 140 of the second adjustment portion 130 may be rotated.

Thus in the projection device 10 according to the present exemplary embodiment, the attachment angle of the projector unit 44 with respect to the support section 66 is adjusted by rotating the adjustment screws 126, 140 of the plural first adjustment portions 120A to 120D and second adjustment portion 130. The position of the projection image 96 formed on the projection screen 22 is thereby corrected by adjusting the attachment angle of the projector unit 44 with respect to the support section 66. Note that an operator rotating the adjustment screws 126, 140 may rotate the adjustment screws 126, 140 while checking the projection image 96 formed on the projection screen 22.

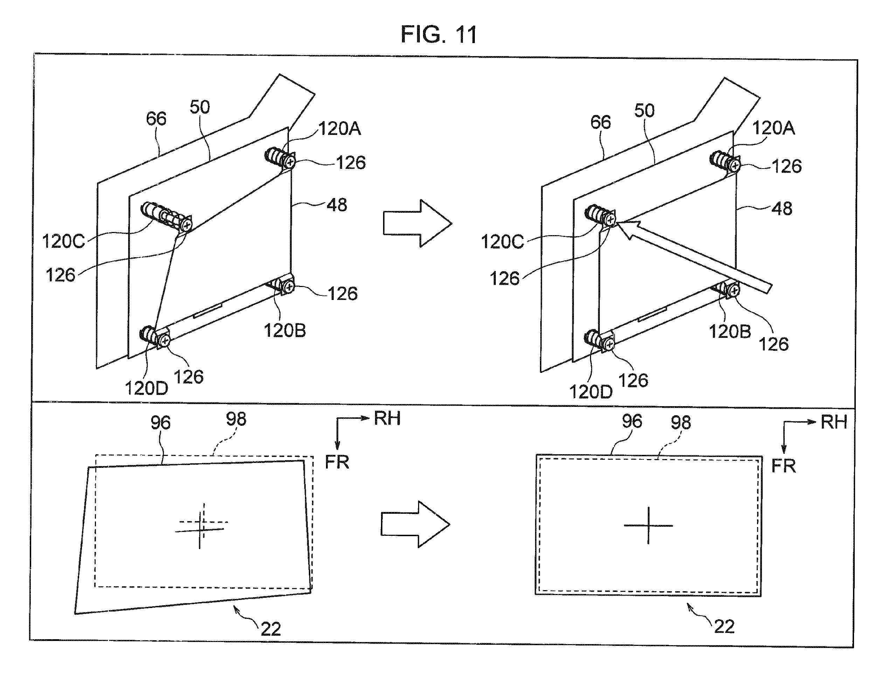

Fig. 11 illustrates an example of correction when the projection image 96 has been displaced downward and to the left. In this example, the adjustment screw 126 of the first adjustment portion 120C has been loosened too much, and the projection image 96 is formed so as to be stretched out downward and to the left with respect to a target image 98 (correct position). Thus in order to align the projection image 96 with the target image 98, the adjustment screw 126 of the first adjustment portion 120C may be rotated in the tightening direction. The position of the bottom left corner portion of the projection image 96 can thereby be adjusted, and the projection image 96 aligned with the target image 98. As a result the projection image 96 can be formed at the desired position on the projection screen 22.

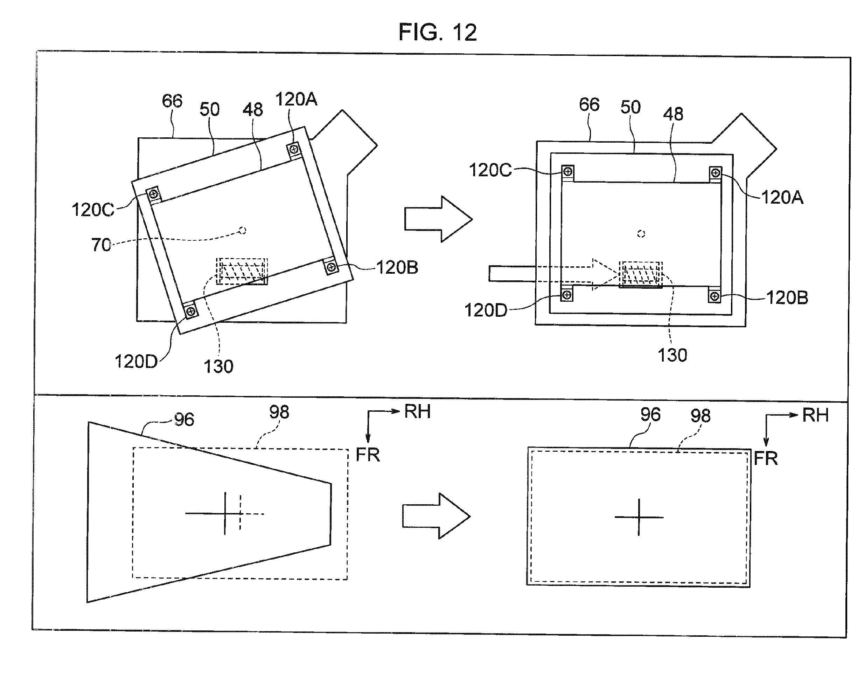

Moreover, Fig. 12 illustrates an example of correction when the projection image 96 has been displaced toward the left with respect to the target image 98. In this example, the adjustment screw 140 of the second adjustment portion 130 has been tightened too much, and the projection image 96 forms a trapezium displaced toward the left. Thus, in order to move the projection image 96 toward the right, the adjustment screw 140 of the second adjustment portion 130 may be rotated in the loosening direction. This thereby enables the projection image 96 to be moved toward the right, enabling the projection image 96 to be aligned with the target image 98. As a result, the projection image 96 can be formed in the desired position on the projection screen 22.

The target image 98 corresponds to the image capture position of the projection screen 22 of the capture camera 34. In the present exemplary embodiment, the attachment angle of the projector unit 44 with respect to the support section 66 is adjusted by the adjustment section 150 containing the plural first adjustment portions 120A to 120D and the second adjustment portion 130. The position of the projection image 96 formed on the projection screen 22 is thereby corrected with respect to the image capture position of the projection screen 22 by the capture camera 34 (the target image 98).

Explanation next follows regarding operation and advantageous effects of the present exemplary embodiment.

As described in detail above, an adjustment section 150 is provided to the projection device 10 of the present exemplary embodiment to adjust the attachment angle of the projector unit 44. This thereby enables the rotation angle of the projector unit 44 to be adjusted about each of the axes, the optical axis AL of the projection light L1, the first orthogonal axis A1, and the second orthogonal axis A2 by using the plural first adjustment portions 120 and the second adjustment portion 130 in the adjustment section 150. This thereby enables the position of the projection image 96 formed on the projection screen 22 to be corrected even in cases in which the projection image 96 is has been displaced from the desired position on the projection screen 22, enabling the projection image 96 to be formed at the desired position of the projection screen 22.

The adjustment section 150 for adjusting the attachment angle of the projector unit 44 is split into the plural first adjustment portions 120 for adjusting the rotation angle about each of the axes of the optical axis AL and the first orthogonal axis A1, and the second adjustment portion 130 for adjusting the rotation angle about the second orthogonal axis A2. This thereby enables adjustment of the rotation angle of the projector unit 44 about each of the axes of the optical axis AL and the first orthogonal axis A1, and adjustment of the rotation angle of the projector unit 44 about the second orthogonal axis A2, to be performed separately from each other. This thereby enables excellent working efficiency to be achieved when performing positional correction of the projection image 96.

However, the plural first adjustment portions 120 correspond to adjustment of position of the corner portions of the projection image 96, and the second adjustment portion 130 corresponds to adjustment of the width direction position of the projection image 96. Thus adjustment of the position of the corner portions of the projection image 96, and adjustment of the width direction position of the projection image 96, can be performed using the plural first adjustment portions 120 and second adjustment portion 130, enabling positional correction of the projection image 96 to be performed even easier.

According to the present exemplary embodiment, the attachment angle of the projector unit 44 with respect to the support section 66 is adjusted using the adjustment section 150 containing the plural first adjustment portions 120A to 120D and the second adjustment portion 130. The position of the projection image 96 formed on the projection screen 22 is thereby corrected against the capture position on the projection screen 22 by the capture camera 34 (the target image 98). This thereby enables the ease of operation to be improved when using the capture camera 34 to capture the projection image 96 formed on the projection screen 22.

Explanation next follows regarding a modified example of the present exemplary embodiment.

As illustrated in Fig. 7, in the present exemplary embodiment, the shaft 70 is provided to the swing member 50, and the hole 110 is formed in the support section 66. However, the hole 110 may be formed in the swing member 50, and the shaft 70 may be provided to the support section 66.

In the present exemplary embodiment, the fixing portion 116 having the through hole 118 is formed to the movable member 48, and the protrusion 122 is provided to the swing member 50. However, the protrusion 122 may be provided to the movable member 48, and the fixing portion 116 having the through hole 118 may be provided to the swing member 50.

In the present exemplary embodiment, the protrusion 136 is provided to the facing portion 132, and the hole 142 is provided to the faced portion 134. However, the hole 142 may be provided to the facing portion 132, and the protrusion 136 may be provided to the faced portion 134.

The first adjustment portions 120A to 120D may each include an adjustment screw that pierces through the fixing portion 116 and the corner portion 50A of the swing member 50, and a nut that is threaded onto a leading end portion of the adjustment screw. In place of a nut, a screw hole may be formed to the corner portion 50A. The adjustment screw may also be a female screw rather than a male screw.

Similarly, the second adjustment portion 130 may include an adjustment screw that pierces through the facing portion 132 and the faced portion 134, and a nut that is threaded onto a leading end portion of the adjustment screw. In place of a nut, a screw hole may be formed to the facing portion 132. The adjustment screw may also be a female screw rather than a male screw.

In the present exemplary embodiment, although the coil springs 124, 138 are employed as examples of the "resilient member" of the first adjustment portions 120 and second adjustment portion 130, a resilient member other than the coil springs 124, 138 may be employed.

In the present exemplary embodiment, although the projection device 10 is preferably provided with the stereo cameras 32 and the capture camera 34, the stereo cameras 32 and/or the capture camera 34 may be omitted.

Although the arm 14 is preferably formed in a pillar shape, the arm 14 may be formed in a shape other than a pillar shape.

In the projection device 10, although the projection screen 22 is preferably a horizontal screen, the projection screen 22 may be non-horizontal screen. When the projection screen 22 is a non-horizontal screen, the arm 14 may extend from the projection screen 22 in another direction.

Although the projection device 10 is preferably provided with a base 12, the base 12 may be omitted. In cases in which the base 12 is omitted from the projection device 10, the arm 14 may extend from projection surface formed on the upper surface of a desk or the ground.

In the projection device 10, the projection image 96 is formed on the projection screen 22 provided to the base 12. However, when the base 12 is omitted from the projection device 10, the projection image 96 may be formed on a projection surface provided on a location other than the base 12.

Explanation has been given of an exemplary embodiment of technology disclosed herein, however technology disclosed herein is not limited thereto, and obviously various modifications are possible in addition to those described above within a range not departing from the spirit of technology disclosed herein.

Technology disclosed herein enables a position of a projection image formed on a projection screen to be corrected.

## Claims

1. A projection device (10) comprising:
an arm (14) extending from a projection screen (22);
a projector unit (44) that outputs a projection light (L1);
a head section (16) that is fixed to the arm (14) further to a leading end side of the arm (14) than the projector unit (44), and that includes a mirror (30) that reflects the projection light (L1) toward the projection screen (22);
a support section (66) that is fixed to the arm (14) and that supports the projector unit (44); and
an adjustment section (150) that adjusts an attachment angle of the projector unit (44) with respect to the support section (66).

2. The projection device (10) of claim 1, wherein:
the adjustment section (150) adjusts a rotation angle of the projector unit (44) with respect to the support section (66) about each of an optical axis (AL) of the projection light (L1), a first orthogonal axis (A1) that is orthogonal to the optical axis (AL), and a second orthogonal axis (A2) that is orthogonal to the optical axis (AL) and to the first orthogonal axis (A1).

3. The projection device (10) of claim 2, wherein the adjustment section (150) includes:
a swing member (50) that is supported by the support section (66), that swings with respect to the support section (66) about the second orthogonal axis (A2), and that supports the projector unit (44);
a first adjustment portion (120A to D) that adjusts the rotation angle of the projector unit (44) with respect to the swing member (50) about each of the optical axis (AL) and the first orthogonal axis (A1); and
a second adjustment portion (130) that adjusts a rotation angle of the swing member (50) with respect to the support section (66) about the second orthogonal axis (A2).

4. The projection device (10) of claim 3, wherein:
the first adjustment portion (120A to D) adjusts a position (Da to Dd) of a corner portion of a projection image (96) formed on the projection screen (22) by adjusting the rotation angle of the projector unit (44) with respect to the swing member (50) about each of the optical axis (AL) and the first orthogonal axis (A1); and
the second adjustment portion (130) adjusts a width direction position (W) of the projection image (96) by adjusting the rotation angle of the swing member (50) with respect to the support section (66) about the second orthogonal axis (A2).

5. The projection device (10) of claim 3 or claim 4, wherein first adjustment portions (120A to D) are provided at a plurality of locations on the projector unit (44), and each of the first adjustment portions (120A to D) includes:
a fixing portion (116) provided at the projector unit (44);
a fixed portion (50A) provided at the swing member (50) so as to face toward the fixing portion (116);
a resilient member (124) interposed between the fixing portion (116) and the fixed portion (50A); and
an adjustment screw (126) that adjusts a distance between the fixing portion (116) and the fixed portion (50A).

6. The projection device (10) of any one of claim 3 to claim 5, wherein the second adjustment portion (130) is provided at the swing member (50) further to a radial direction outer side than a rotation shaft (70), and the second adjustment portion (130) includes:
a facing portion (132) that is provided at the support section (66);
a faced portion (134) that is provided at the swing member (50) so as to face the facing portion (132) along a swing direction of the swing member (50);
a resilient member (138) that is interposed between the facing portion (132) and the faced portion (134); and
an adjustment screw (140) that adjusts a distance between the facing portion (132) and the faced portion (134).

7. The projection device (10) of any one of claim 1 to claim 4, wherein:
the head section (16) includes a camera (34) that captures an image of the projection screen (22); and
the adjustment section (150) corrects a position of a projection image (96) formed on the projection screen (22) with respect to an image capture position (98) on the projection screen (22) by the camera (34), by adjusting an attachment angle of the projector unit (44) with respect to the support section (66).

8. The projection device (10) of any one of claim 1 to claim 7, wherein:
the head section (16) includes at least a camera (34) that captures an image of the projection screen (22), or a camera (32) that captures an image of the projection screen (22) from a side direction.

9. The projection device (10) of any one of claim 1 to claim 8, wherein:
the head section (16) includes a light (36) that illuminates light toward the projection screen (22).

10. The projection device (10) of any one of claim 1 to claim 9, wherein:
the arm (14) extends upward from the projection screen (22); and
the head section (16) is fixed to the arm (14) further up than the projector unit (44).

11. The projection device (10) of claim 10, wherein
the projector unit (44) outputs the projection light (L1) upward from the projector unit (44).

12. The projection device (10) of claim 10 or claim 11, wherein the mirror (30) is provided at a lower face of the head section (16).
